# EUROPEAN PATENT APPLICATION

(11) **EP 2 740 620 A1**
(43) Date of publication of application: **11.06.2014**
(21) Application number: 12819425.5
(22) Date of filing: 26.07.2012
(51) Int. Cl.: B60J 1/10

(54) **RUBBER MOLDING FOR VEHICLE AND METHOD FOR ATTACHING SIDE WINDOW WITH RUBBER MOLDING CLAMPED THEREON**

(30) Priority: 02.08.2011 JP 2011169295
(71) Applicant: Central Glass Company, Limited, Yamaguchi 755-0001 (JP)
(72) Inventor: TAKAYAMA, Mitsuhiro, Matsusaka-shi, Mie 515-001 (JP)
(74) Representative: Manitz, Finsterwald & Partner GbR
(86) International application number: PCT/JP2012/068907
(87) International publication number: WO 2013/018630

(57) **Abstract**

Disclosed is a molding having a window clamping portion clamped on a bottom edge of a vehicle side window. The molding is such that it is equipped with a molding backside member provided with a groove, on a side of a flange surface of a vehicle side window attachment portion of the molding, and that an opening surface of the groove is opposed to the flange surface of the vehicle side window attachment portion. This molding is a molding that can be constituted by a small number of parts and that can be prevented from falling off the side window.

## Description

### TECHNICAL FIELD

The present invention relates to a molding that is clamped on a bottom edge of a side window that is fixed to a vehicle side window attachment portion, and a method for attaching a side window with the molding clamped thereon to the vehicle side window attachment portion.

### BACKGROUND OF THE INVENTION

In some cases, a molding is attached to a peripheral portion of a side widow that is fixed to a vehicle side window attachment portion. As a molding clamped on the side window peripheral portion, there has been proposed a molding (Patent Publication 1) to be clamped on a peripheral portion of the side window by a molding main body and a plurality of molding clips that have molding attachment portions to be attached to the molding main body and that are slidable relative to the molding main body. Furthermore, there has been proposed a molding (Patent Publication 2) as shown in Fig. 7 that has a projection portion to be brought into abutment with a vehicle exterior side of the side window and a clamping piece to be brought into abutment with a vehicle interior side of the side window, which have been integrally formed, and that is clamped on the bottom edge of the side window by the projection portion and the clamping piece.

In the molding clamped on the side window as described in Patent Publication 1, some of a plurality of molding clips attached to the side window with the molding clamped thereon and the molding main body of the molding are equipped with locating pins for positioning and temporal tacking of the side window with the molding clamped thereon to a flange surface of the vehicle side window attachment portion. When the side window with the molding clamped thereon is attached to the flange surface of the vehicle side window attachment portion, an adhesive is applied to a peripheral portion positioned at the inside of a portion of the side window on which the molding is clamped, and then the locating pins are fit into positioning holes formed at predetermined positions of the flange surface of the side window attachment portion.

In the molding shown in an embodiment of Patent Publication 1, a monolithic molding is clamped on the top edge and the bottom edge of the side window. If the molding described in Patent Publication 1 is a molding clamped on only the bottom edge of the side window, since some of the molding clips of the molding are equipped with the locating pins, when the side window with the molding clamped thereon is bonded to the flange surface of the vehicle side window attachment portion, the molding is temporarily tacked to the flange surface of the vehicle side window attachment portion. With this, it is possible to prevent the molding from falling off the body.

Furthermore, in the molding clamped on the bottom edge of the side window as shown in Fig. 7 and described in Patent Publication 2, the molding is only clamped on the bottom edge of the side window. The fixing and the positioning to the vehicle side window attachment portion are conducted by inserting bolts mounted on the side window into positioning holes provided at predetermined positions of the flange surface of the vehicle side window attachment portion and then the bolts are fastened by nuts. Therefore, it is not necessary to conduct positioning of the molding after attaching the side window to the vehicle side window attachment portion. With this, it is possible to smoothly conduct the operation when assembling the vehicle.

### PRIOR ART PUBLICATIONS

### PATENT PUBLICATIONS

Patent Publication 1: Japanese Patent Application Publication 2008-80917
Patent Publication 2: Microfilm of Japanese Utility Model Application Publication Showa 61-169716

### SUMMARY OF THE INVENTION

However, in case that the molding described in Patent Publication 1 is a molding clamped on only the bottom edge of the side window, since both the molding and the side window are equipped with locating pins, in case that the position of the molding is different from the predetermined position after the side window has been attached to the vehicle side window attachment portion, it is necessary to conduct positioning of the molding. Therefore, there has been a problem to increase the operation man-hour when assembling the vehicle.

Furthermore, as compared with Patent Publication 1, the molding described in Patent Publication 2 is less in terms of the number of parts, but is only clamped on the bottom edge of the side window. Therefore, there has been a possibility that the molding falls off after attaching the side window to the vehicle side window attachment portion.

The present invention aims to solve these problems. That is, as to a molding clamped on the bottom edge of the vehicle side window, it is an object to provide a molding that can be constituted by a less number of parts, that does not increase the operation man-hour when assembling the vehicle, and that can prevent falling off the side window after attaching the side window with the molding clamped thereon to the vehicle side window attachment portion.

According to the present invention, there is provided a molding having a window clamping portion clamped on the bottom edge of a vehicle side window, the molding being a molding (first molding) characterized by that the molding is equipped with a molding backside member provided with a groove, on a side of a flange surface of a vehicle side window attachment portion of the molding, and that an opening surface of the groove is opposed to the flange surface of the vehicle side window attachment portion.

The first molding may be (a second molding) characterized by that a top surface of the molding backside member of the molding is a flat surface extending in a longitudinal direction of the molding, and that the flat surface is used as a primer application surface for applying a primer for bonding an adhesive that bonds the side window with the flange surface of the vehicle side window attachment portion.

The first or second molding may be a third molding characterized by that the widow glass clamping portion is provided with an inclined portion by bending an area around a mouth of the window clamping portion of the molding to have an inclination.

Any one of the first to third moldings may be a fourth molding characterized by that it is provided at a mouth of the window clamping portion of the molding with a window abutment lip projecting towards an inside of the window clamping portion.

According to the present invention, there is provided a method for attaching a side window, characterized by that any one of the first to fourth moldings is clamped on a bottom edge of the side window, that a primer and an adhesive are applied to a peripheral portion of the side window, and that an attachment is conducted such that, when the side window is bonded to a flange surface of the vehicle side window attachment portion, the adhesive is pressed between the side window and the flange surface of the vehicle side window attachment portion, thereby making the adhesive flow into the groove.

Furthermore, according to the present invention, there is provided a method for attaching a side window, characterized by that any one of the second to fourth moldings is clamped on a bottom edge of the side window and that, when a primer is applied to the side window, the primer is applied simultaneously to the primer application surface, too.

### ADVANTAGEOUS EFFECT OF THE INVENTION

The vehicle molding of the present invention is a molding having a window clamping portion that is clamped on the bottom edge of a vehicle side window. On the side of a vehicle side window attachment portion of the molding, there is formed a molding backside member equipped with a groove, of which opening is opposed to a flange surface of the vehicle side window attachment portion. Therefore, when the side window has been bonded to the flange surface of the vehicle side window attachment portion, an adhesive applied above the molding clamped on the bottom edge of the side window is pressed against the flange surface of the vehicle side window attachment portion, thereby making a part of the adhesive flow into the groove. Then, once the adhesive made to flow into the groove solidifies, the solidified adhesive is caught in the groove. With this, it is possible to prevent the molding from falling off the side window.

### BRIEF DESCRIPTION OF THE DRAWINGS

Fig. 1 is a view showing a condition in which, when a molding according to Example 1 has been clamped on the bottom edge of a side window, the side window is seen from the back side;
Fig. 2 is a cross-sectional view showing around the molding according to Example 1, when the side window with the molding clamped thereon has been bonded to a flange surface of a vehicle side window attachment portion;
Fig. 3 is a cross-sectional view showing around the molding according to Example 1, when the side window with the molding clamped thereon is bonded to a flange surface of a vehicle side window attachment portion;
Fig. 4 is a cross-sectional view showing around the molding according to Example 1, when the molding is clamped on the side window;
Fig. 5 is a view showing a condition in which, when a molding according to Example 2 has been clamped on the bottom edge of a side window, the side window is seen from the back side;
Fig. 6 is a cross-sectional view showing around the molding according to Example 2, when the side window with the molding clamped thereon has been bonded to a flange surface of a vehicle side window attachment portion; and
Fig. 7 is a cross-sectional view showing around a molding according to a conventional example, when the side window with the molding clamped thereon has been bonded to a flange surface of a vehicle side window attachment portion.

### DETAILED DESCRIPTION

### <Structure of the molding of the present invention>

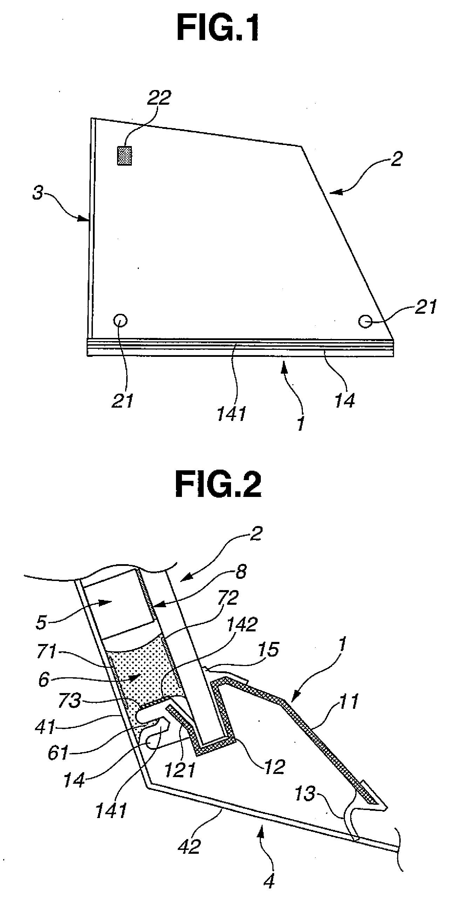

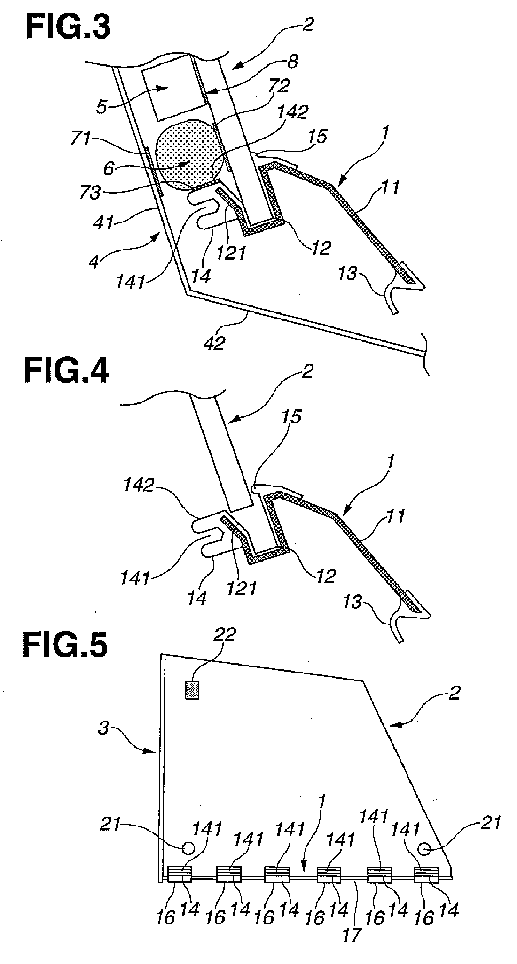

For example, like a molding 1 of Fig. 1, a molding of the present invention is clamped on the bottom edge of a side window 2. Those showing cross-sections around the molding of Fig. 1 are Fig. 2 and Fig. 3.

As shown in Fig. 2, the molding 1 of the present invention is clamped on the bottom edge of the side window 2. Herein, when the molding 1 has been clamped on the bottom edge of the side window 2, the side of a flange surface 41 of a vehicle side window attachment portion 4 of the side window 2 is called the back side of the molding 1, and the opposite side is called the front side of the molding 1.

The molding 1 of the present invention is equipped with a metal core member 11 made of a metal material such as stainless steel, and a window clamping portion 12 made by bending a part of the metal core member 11 to be C-shaped. By a complex extrusion using the metal core member 11 as a core member, a molding backside member 14 is formed on the back side of the molding 1 by a resin, and a body abutment lip 13 is formed on the front side of the molding 1 by a resin.

When forming the window clamping portion 12, it is optional to bend an area around the mouth of the window clamping portion 12 towards the side of the flange surface 41 of the vehicle side window attachment portion 4 to make an inclined portion 121 of the window clamping portion.

On the back side of the molding 1, an adhesive penetration groove 141 is formed on the molding backside member 14. An opening surface of the adhesive penetration groove 141 is opposed to the flange surface 41 of the vehicle side window attachment portion 4. It is optional to make its top surface flat in the longitudinal direction of the molding to make a primer application surface 142.

On the front side of the molding 1, the body abutment lip 13 is formed at a tip portion of the metal core member 11. It is optional to form a window abutment lip 15 at a mouth of the window clamping portion 12 in a manner to project towards the inside of the window clamping portion 12.

### <When inserting the bottom edge of the side window into the molding of the present invention>

Fig. 4 is a cross-sectional view of the molding 1 and the side window 2, showing a condition when inserting the bottom edge of the side window 2 into the window clamping portion 12 into the molding 1 of the present invention. Upon this, since the inclined portion 121 of the window clamping portion is formed at the mouth of the window clamping portion 12, when the side window 2 is inserted into the window clamping portion 12, it is possible to smoothly insert the same into the window clamping portion 12.

The width of at least a part of the window clamping portion 12 is formed to be a little narrower than the thickness of the side window 2. Therefore, in case that the window abutment lip 15 is not formed at the front side of the mouth of the window clamping portion 12, when the bottom edge of the side window 2 is clamped by the window clamping portion 12, the mouth of the window clamping portion extends to cause a gap between the side window 2 and the front side of the mouth of the window clamping portion 12. Therefore, it causes a defect that dust penetrates into the gap and a defect that the gap itself damages the appearance.

Then, in case that the window abutment lip 15 is formed on the front side of the mouth of the window clamping portion 12, it is formed to project towards the inside of the window clamping portion 12. Therefore, when the side window 2 has been inserted into the window clamping portion 12, the window abutment lip 15 is brought into abutment with the front side of the side window 2. Therefore, it is possible by forming the window abutment lip 15 to avoid the generation of a defect that dust penetrates into a gap caused between the side window 2 and the front side of the mouth of the window clamping portion 12 and a defect that the existence of the gap damages the appearance when the side window 2 has been attached to the vehicle side window attachment portion 4.

### <Method for bonding the side window with the molding of the present invention clamped thereon to the flange surface of the vehicle side window attachment portion>

Fig. 3 is a cross-sectional view of around the molding, showing a condition when bonding the side window 2 with the molding 1 of the present invention clamped thereon to the flange surface 41 of the vehicle side window attachment portion 4.

When bonding the side window 2, a dam rubber 5 is previously stuck on a peripheral portion of the side window by a double-sided tape 8. A primer is applied to a peripheral portion on the outside of the dam rubber 5 of the side window 2 to form a primer application layer 72 of the side window. A urethane adhesive is applied on the primer application layer along a peripheral portion of the side window 2. In a region where the molding 1 on the bottom edge of the side window 2 is clamped, the primer application layer 72 of the side window is formed in a region interposed between the molding 1 and the dam rubber 5. Furthermore, a primer is also applied onto the flange surface 41 of the vehicle side window attachment portion 4 so as to correspond to the primer application layer 72 of the side window, thereby forming a primer application layer 71 of the body side window attachment portion.

Like Fig. 3, in case that a flat surface is formed on the top surface of the molding backside member 14 in the longitudinal direction of the molding 1, it can be used as a primer application surface 142. It is possible to form a primer application layer 73 of the molding by applying the primer onto the primer application surface 142. Since the primer is applied by impregnating a brush or cloth such as felt, it is possible to widely apply the primer. Therefore, it is possible to apply the primer onto the side window 2 and the primer application surface 142 at the same time by setting the primer application surface 72 of the side window to be close to the primer application surface 142. With this, it is possible to efficiently conduct an operation for attaching the side window 2 to the vehicle side window attachment portion 4 in vehicle assembly steps.

As shown in Fig. 2, when the side window 2 is bonded to the flange surface of the vehicle side window attachment portion 4, the urethane adhesive 6 is also bonded to the primer application surface 142 by forming the primer application layer 73 on the primer application surface 142. Therefore, the side window 2 and the molding 1 are bonded together by the urethane adhesive 6, thereby preventing the molding 1 from falling off the side window 2.

Furthermore, from Fig. 2, when the side window 2 is attached to the flange surface 41 of the vehicle side window attachment portion 4, the urethane adhesive 6 is pressed between the side window 2 and the flange surface 41 of the vehicle side window attachment portion 4. Therefore, it extends upward and downward, and a part of that penetrates into the adhesive penetration groove 141 formed on the molding backside portion 14 of the molding 1, thereby forming an adhesive portion 61 penetrated into the adhesive penetration groove. Once the adhesive portion 61 penetrated into the adhesive penetration groove solidifies, the molding 1 is caught in the adhesive penetration groove 141 by the adhesive portion 61 penetrated in the adhesive penetration groove. Therefore, it is possible to prevent the molding 1 from falling off the side window 2.

Furthermore, as shown in Fig. 2, the flange surface 41 of the vehicle side window attachment portion 4 is formed at a deep place. From the body surface to the flange surface 41, there is formed a window frame surface 42 constituted of a gentle inclination and/or step. When the side window 2 is bonded to a predetermined position of the vehicle side window attachment portion 4, the body abutment lip 13 is brought into abutment with the window frame surface 42, and the molding 1 is pressed between the side window 2 and the window frame surface 42. Therefore, it is possible to expect the effect for preventing the molding 1 from falling off the side window 2 by a certain degree.

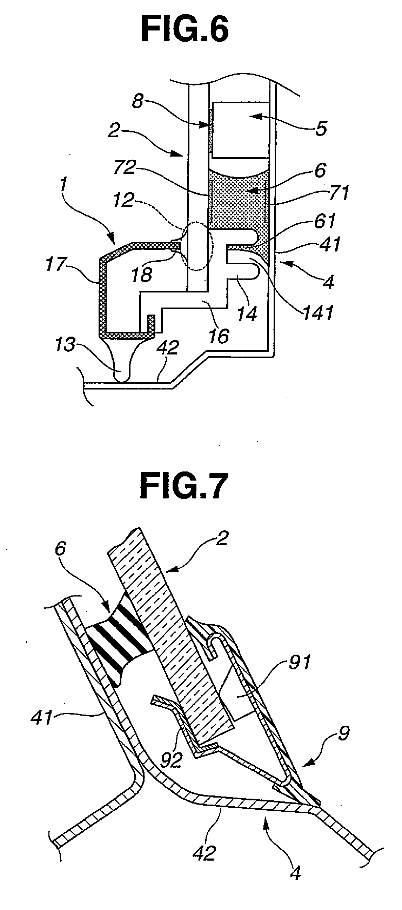

Like Fig. 1 to Fig. 4, in the molding of the present invention, the window clamping portion 12, the molding backside member 14 equipped with the adhesive penetration groove 141, and the like are formed together by extrusion. It is possible to obtain advantageous effects similar to those of the molding 1 of Fig. 1 to Fig. 4 by attaching to the molding main body 17 a plurality of molding clips 16 with the molding backside members 14 formed thereon and equipped with the adhesive penetration grooves 14, like Fig. 5 and Fig. 6.

Furthermore, in the case of producing the molding of the present invention by extrusion, like Fig. 1 to Fig. 4, it is general to form the metal core member 11 by a metal such as stainless steel and form other constituent elements by a resin by a complex extrusion. It is, however, possible to form the present molding as a whole by a resin, too.

### EXAMPLES

In the following, each example of the present invention is explained.

### <Example 1>

### [Constitution of the molding of Example 1]

Fig. 4 is a cross-sectional view showing a condition in which one is trying to insert the side window 2 into the molding of Example 1 of the present invention.

From Fig. 4, the molding 1 of the present invention is equipped with the metal core member 11 constituted of a stainless metal material and the window clamping portion 12 formed by bending a part of the metal core member 11 to be C-shaped. Moreover, an area around the window clamping portion 12 is bent towards the vehicle side window attachment portion 4 to form an inclined portion 121 of the window clamping portion.

Then, using the metal core member 11 as a core member, the body abutment lip 13, the molding backside member 14, and the window abutment lip are formed by a resin by a complex extrusion. Then, the molding backside member 14 is equipped with the adhesive penetration groove 141 and the primer application surface 142.

The body abutment lip 13 is formed at a tip portion of the metal core member 11 on the front side of the molding 1. The window abutment lip is formed at a mouth of the window clamping portion 12 on the front side of the molding 1 to project towards the inside of the window clamping portion 12.

The molding backside member 14 is formed on the back side of the molding 1. An opening surface of the adhesive penetration groove 141 formed on the molding backside member 14 is opposed to the flange surface 41 of the vehicle side window attachment portion 4. Furthermore, the primer application surface 142 formed on the molding backside member 14 is one prepared by making the top surface of the molding backside member 14 flat in the longitudinal direction of the molding.

### [Method for clamping the molding of Example 1 on the side window]

When clamping the bottom edge of the side window 2 by the window clamping portion 12 of the molding 1, as shown in Fig. 4, it is convenient to insert the bottom edge of the side window 2 into the window clamping portion 12 along the inclined portion 121 of the window clamping portion, while it is kept in abutment with the inclined portion 121 of the window clamping portion. Since the molding 1 of Example 1 is equipped with the inclined portion 121 of the window clamping portion, it is possible to smoothly insert the side window 2 into the window clamping portion 12.

The width of at least a part of the window clamping portion 12 is narrower than the thickness of the side window 2. Therefore, when the side window 2 has been inserted into the window clamping portion 12, the width of the mouth of the window clamping portion 12 extends. In the molding 1 of Example 1, the window abutment lip 15 is formed on the front side of the mouth of the window clamping portion 12 in a manner to project towards the inside of the window clamping portion 12. Therefore, even if the width of the mouth of the window clamping portion 12 has extended as above, the window abutment lip 15 is brought into abutment with the surface of the side window 2. Therefore, it is possible by the formation of the window abutment lip 15 to prevent the generation of a gap between the surface of the side window and the window clamping portion 12 resulting from the extension of the width of the mouth of the window clamping portion 12 by inserting the side window 2 into the window clamping portion 12.

### [Method for bonding the side window to the flange surface of the vehicle side window attachment portion]

Fig. 1 is one showing a condition in which, when the molding 1 of Example 1 has been clamped on the bottom edge of the side window 2, the side window 2 is seen from the back side. The side window 2 with the molding 1 of Example 1 clamped thereon is formed with a side edge molding 3 at a side edge of the side window that comes into contact with a door not shown in the drawings. Furthermore, in order to conduct a smooth positioning when attaching the side window 2 to the vehicle side window attachment portion 3, locating pins are bonded to two positions of the bottom edge portion of the side window 2, and a fastener 22 is bonded to one position of the top edge portion of the side window 2. Then, the flange surface 41 of the vehicle side window attachment portion 4 is previously formed with positioning holes, not shown in the drawings, at positions corresponding to the locating pins 22 at two positions bonded to the side window 2, for inserting the locating pins 22, and formed with a fastener, not shown in the drawings, at a position corresponding to the fastener 22 bonded to the side window 2.

Fig. 3 is a cross-sectional view of around the molding 1, showing a condition in which one is trying to bond the side window 2 with the molding 1 of Example 1 clamped thereon to the flange surface 41 of the vehicle side window attachment portion 4. When bonding the side window 2 to the flange surface 41 of the vehicle side window attachment portion 4, at first the dam rubber 5 is stuck on the back surface of the side window 2 by the double-sided tape 8 along a periphery of the side window 2 by making a circuit of the side window 2. Furthermore, the primer is applied along a periphery outside of the dam rubber 5 on the back surface of the side window 2 to form the primer application layer 72 of the side window.

At the bottom edge of the side window 2 with the molding 1 clamped thereon, the primer is applied by using a brush or felt cloth in a region interposed between the dam rubber 5 and the molding backside member 14 on the back surface of the side window 2 to form the primer application layer 72 of the side window. Furthermore, the primer is also applied onto the primer application surface 142 formed on the top surface of the molding backside member 14.

Like Fig. 3, when the primer is applied on the surface of the backside of the bottom edge of the side window by using a brush or felt cloth, it is possible to conduct the application so that the brush or felt cloth is also simultaneously brought into contact with the primer application surface 142 by setting the position of the primer application layer 72 of the bottom edge of the back surface of the side window 2 to be close to the primer application surface 142 formed on the molding backside member 14. With this, it is possible to improve the operation efficiency.

Furthermore, the primer is also applied on the flange surface 41 of the vehicle side window attachment portion 4 at a position corresponding to the primer application layer 72 of the side window to form the primer application layer 71 of the vehicle side window attachment portion.

Then, like Fig. 3, the urethane adhesive 6 is applied onto the primer application layer 72 of the side window in a manner to make a circuit of a peripheral portion of the side window 2.

Then, the positioning is conducted such that the locating pins 21 and the fastener 22, bonded to the side window 2, respectively correspond to the positioning holes for inserting the locating pins and the fastener, which have been formed on the flange surface 41 of the vehicle side window attachment portion 4, in a manner to correspond to the positions of the locating pins 21 and the fastener 22, which have been bonded to the side window 2, followed by pressing the side window 2 against the flange surface 41 of the vehicle side window attachment portion 4 for its bonding.

Fig. 2 is a cross-sectional view showing a condition around the molding 1, when the side window 2 has been bonded to the flange surface 41 of the vehicle side window attachment portion 4. In Fig. 2, the urethane bond 6 is pressed by the side window 2 against the flange surface 41 of the vehicle side window attachment portion 4 and thereby extends. As a result, a part of that penetrates into the adhesive penetration groove 141 formed on the molding backside member 14 to form the adhesive portion 61 penetrated into the adhesive penetration groove. Furthermore, the urethane adhesive 6 is also bonded to the primer application surface 142 of the molding backside member 14.

Once the urethane adhesive 6 solidifies, the molding 1 is caught in the adhesive penetration groove 141 by the adhesive portion 61 penetrated in the adhesive penetration groove. Therefore, it is possible to prevent the molding 1 from falling off the side window 2.

Furthermore, since the urethane adhesive 6 is bonded to the primer application surface 142, the molding 1 and the side window 2 are bonded together by the urethane adhesive 6. Therefore, it is possible to prevent the molding 1 from falling off the side window 2.

Furthermore, the flange surface 41 of the vehicle side window attachment portion 4 is formed at a deep place. There is a gentle inclination as the window frame surface 42 from the body surface to the flange surface 41. When the side window 2 is bonded to a predetermined position of the flange surface 41 of the vehicle side window attachment portion 4, the body abutment lip 13 is brought into abutment with the window frame surface 42, and the molding 1 is pressed between the side window 2 and the window frame surface 42. Therefore, it is possible to expect the effect for preventing the molding 1 from falling off the side window 2 by a certain degree.

### <Example 2>

Fig. 5 is a view showing a condition in which, when the molding 1 of Example 2 has been clamped on the bottom edge of the side window 2, the side window 2 is seen from the back side.

The molding 1 of Example 2 has a structure in which a plurality of the molding clips 16 have been attached to the molding main body 17 made of stainless steel so that they do not come off the molding main body 17.

Fig. 6 is a cross-sectional view of an area where molding clips 16 of the molding 1 are attached, showing a condition when the side window 2 with the molding 1 of Example 2 attached thereto has been bonded to the vehicle side window attachment portion 4.

The molding 1 of Example 2 is equipped with a stainless steel molding main body 1 formed with a body abutment lip 13, and a plurality of molding clips 16 are attached thereto. The molding clip 16 is formed with a molding backside member 14. The molding backside member 14 is equipped with an adhesive penetration groove 141. An opening surface of the adhesive penetration groove 141 is opposed to the flange surface 41 of the vehicle side window attachment portion 4.

A window clamping portion 12 of the molding 1 occupies a region interposed between a resin-made, sealing portion 18 formed at a tip portion of the molding main body 17 and the molding backside member 14. Since elastic means such as spring not shown in the drawings is attached to a surface of the molding backside member 14, which surface is opposed to the side window 2, the molding 1 is pressed against the sealing member 18 by the elastic means. With this, it is firmly clamped on the bottom edge of the side window 2.

The method for bonding the side window 2 with the molding 1 of Example 2 clamped thereon to the flange surface 41 of the vehicle side window attachment portion 4 is the same as the bonding method shown in Example 1.

As shown in Fig. 6, when bonding the side window 2 to the flange surface 41 of the vehicle side window attachment portion 4, the side window 2 is pressed against the flange surface 41 of the vehicle side window attachment portion 4. With this, the urethane adhesive 6 is pressed by the side window 2 against the flange surface 41 of the vehicle side window attachment portion 4 and thereby extends. A part of that penetrates into the adhesive penetration groove 141, thereby forming an adhesive portion 61 penetrated into the adhesive penetration groove.

Once the urethane adhesive 6 solidifies, the molding 1 is caught in the adhesive penetration groove 141 by the adhesive portion 61 penetrated in the adhesive penetration groove. Therefore, it is possible to prevent the molding 1 from falling off the side window 2.

Furthermore, the flange surface 41 of the vehicle side window attachment portion 4 is formed at a deep place. A step is formed as the window frame surface 42 from the body surface to the flange surface 41. When the side window 2 is bonded to a predetermined position of the flange surface 41 of the vehicle side window attachment portion 4, the body abutment lip 13 is brought into abutment with the window frame surface 42, and the molding 1 is pressed between the side window 2 and the window frame surface 42. Therefore, it is possible to expect the effect for preventing the molding 1 from falling off the side window 2 by a certain degree.

In the molding 1 of Example 2, the molding backside members 14 formed on the molding clips 16 attached by a plural numbers to the molding 1 are equipped with the adhesion penetration grooves 141. Therefore, the force for catching the molding 1 by the adhesive penetration groove 141 becomes weak in the molding 1 of Example 2, as compared with the case of forming the adhesive penetration groove 141 in the longitudinal direction of the molding 1 in its entirety as in Example 1. However, even the constitution like Example 2 can be used with no practical problem.

A preferable embodiment has been described as above. The present invention is, however, not limited to this, but various applications can be expected.

### <Conventional Example>

Fig. 7 is a cross-sectional view showing a condition of around a molding 9 of a conventional example, when the side window 2 with the molding 9 of the conventional example shown in Patent Publication 2 has been bonded to the flange surface 41 of the vehicle side window attachment portion 4.

By the molding 9 of the conventional example, the bottom edge of the side window 2 is only clamped between a projection portion 91 formed on the front side of the molding 9 of the conventional example and a clamping piece 92 formed on the back side of the molding 9 of the conventional example. It is not equipped with the molding backside member 14 equipped with the adhesive penetration groove 141 as shown by the molding 1 of the present invention.

### EXPLANATION OF SIGNS

1: a molding
11: a metal core member
12: a window clamping portion
121: an inclined portion of the window clamping portion
13: a body abutment lip
14: a molding backside member
141: an adhesive penetration groove
142: a primer application surface
15: a window abutment lip
16: a molding clip
17: a molding main body
2: a side window
21: a locating pin
22: a fastener
3: a side edge molding
4: a vehicle side window attachment portion
41: a flange surface
42: a widow frame surface
5: a dam rubber
6: a urethane adhesive
61: an adhesive penetrated into the adhesive penetration groove
71: a primer application layer of the vehicle side window attachment portion
72: a primer application layer of the side window
73: a primer application layer of the molding
8: a double-sided tape
9: a molding of a conventional example
91: a projection portion
92: a clamping piece

## Claims

1. A molding (1) having a window clamping portion (12) clamped on a bottom edge of a side window (2) of a vehicle, the molding being **characterized by** that the molding is equipped with a molding backside member (14) provided with a groove (141), on a side of a flange surface (41) of a vehicle side window attachment portion (4) of the molding (1), and that an opening surface of the groove (141) is opposed to the flange surface (41) of the vehicle side window attachment portion (4).

2. The molding as claimed in claim 1, which is **characterized by** that a top surface of the molding backside member (14) of the molding (1) is a flat surface (142) extending in a longitudinal direction of the molding, and that the flat surface (142) is used as a primer application surface (142) for applying a primer for bonding an adhesive (6) that bonds the side window (2) with the flange surface (41) of the vehicle side window attachment portion (4).

3. The molding as claimed in claim 1 or 2, which is **characterized by** that the widow clamping portion (12) of the molding (1) is provided with an inclined portion (121) by bending an area around a mouth of the window clamping portion (12) of the molding (1) to have an inclination.

4. The molding as claimed in any one of claims 1 to 3, which is **characterized by** that the molding is provided at a mouth of the window clamping portion (12) of the molding (1) with a window abutment lip (15) projecting towards an inside of the window clamping portion (12).

5. A method for attaching a side window, **characterized by** that the molding (1) according to any one of claims 1 to 4 is clamped on a bottom edge of the side window (2), that a primer and an adhesive are applied to a peripheral portion of the side window (2), and that, when the side window (2) is bonded to a flange surface (41) of the vehicle side window attachment portion (4), the adhesive is pressed between the side window (2) and the vehicle side window attachment portion (4), thereby making the adhesive flow into the groove (141).

6. A method for attaching a side window, **characterized by** that the molding (1) according to any one of claims 2 to 4 is clamped on a bottom edge of the side window (2) and that, when a primer is applied to the side window (2), the primer is applied simultaneously to the primer application surface (142), too.
